Europäisches Patentamt

(19) European Patent Office

Office européen des brevets

(11) Numéro de publication : **0 022 720**
**B1**

(12) **FASCICULE DE BREVET EUROPÉEN**

(45) Date de publication du fascicule du brevet :
13.07.83

(51) Int. Cl.³ : **B 60 P   1/30**

(21) Numéro de dépôt : **80401043.7**

(22) Date de dépôt : **11.07.80**

(54) **Benne basculante amovible, notamment pour véhicules utilitaires.**

(30) Priorité : **13.07.79 FR 7918193**

(43) Date de publication de la demande :
**21.01.81 Bulletin 81/03**

(45) Mention de la délivrance du brevet :
**13.07.83 Bulletin 83/28**

(84) Etats contractants désignés :
**AT BE CH DE GB IT LI LU NL SE**

(56) Documents cités :
**CH A 532 491**
**DE C 327 392**
**FR A 387 089**
**FR A 423 638**
**FR A 2 393 696**
**FR E 9 047**
**GB A 463 907**

(73) Titulaire : **Houze, Louis Marcel Lucien**
**271 rue de Belleville**
**F-75019 Paris (FR)**

**Laligue, Guy René Eugène**
**Issac Premilhat**
**F-03410 Domerat (FR)**

(72) Inventeur : **Laligue, Guy René Eugène**
**Issac Premilhat**
**F-03410 Domerat (FR)**

(74) Mandataire : **Vander-Heym, Roger**
**172 Boulevard Voltaire**
**F-75011 Paris (FR)**

Benne basculante amovible notamment pour véhicules utilitaires

La présente invention est relative à une benne basculante amovible plus particulièrement mais non exclusivement destinée aux véhicules utilitaires et commerciaux ayant une ouverture arrière, du type bâché ou non.

Par le brevet FR-A 387 089, on connaît une benne basculante pouvant être déplacée sur un châssis sur lequel s'articulent vers l'arrière autour d'un axe deux rails de guidage de galets rendus solidaires de ladite benne.

Un tel dispositif est très encombrant car, en position de transport, les rails de guidage s'étendent au-delà de l'extrémité arrière de la benne.

Selon l'invention, chaque rail, constitué par un profilé, est rendu solidaire et disposé au-dessus d'un second profilé, articulé vers l'arrière sur l'axe de pivotement, dans lequel coulisse un cadre permettant par son extension de prolonger le chemin de roulement de la benne au-delà du bord arrière du véhicule.

Le coulissement du cadre précité est limité par un dispositif permettant d'obtenir successivement deux positions, à savoir : une position de déchargement et une position de chargement cette dernière correspondant à l'extension maximale du cadre.

Enfin, des moyens sont prévus pour assurer le maintien de la benne en position de transport et en position de basculage ainsi que pour soutenir le cadre coulissant en position d'extension maximale.

L'invention sera mieux comprise par la description qui va suivre faite en se référant aux dessins annexés à titre d'exemple indicatif seulement, sur lesquels :

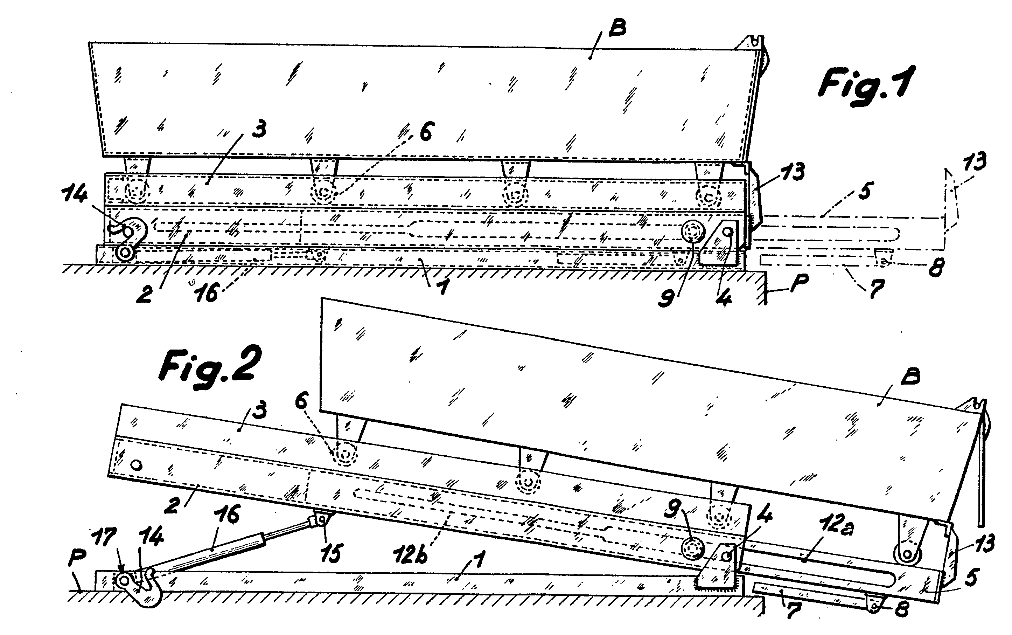

La figure 1   est une vue en élévation d'une benne conforme à l'invention, en position de transport ;

La figure 2   est une vue analogue de la benne en position de déchargement ;

La figure 3   représente la vue de droite de la figure 1 ;

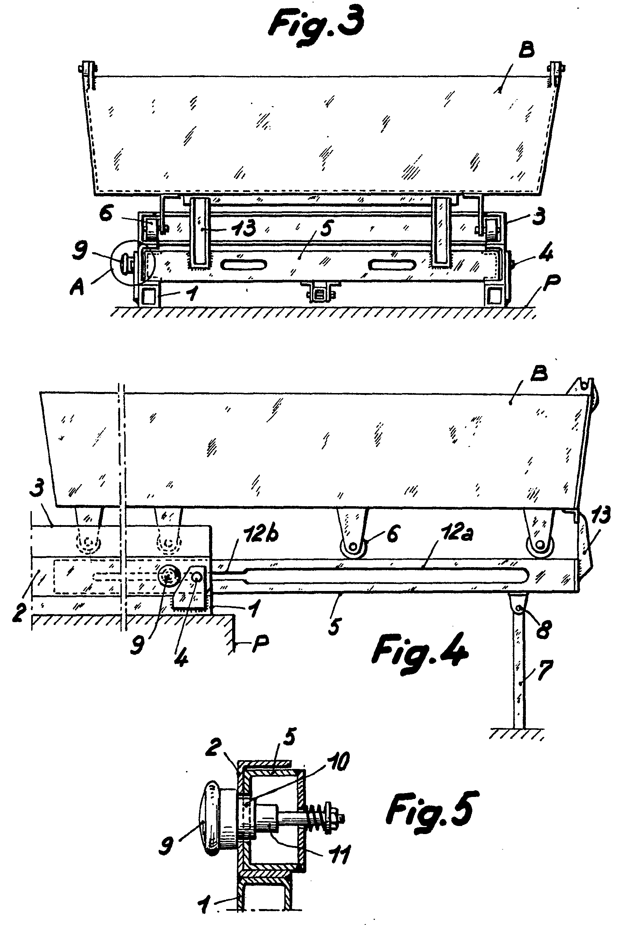

La figure 4   est une vue partielle montrant la benne en position d'extension, hors du véhicule, en vue de son chargement ;

La figure 5   montre en coupe le détail A de la figure 3.

En se reportant aux dessins, et selon un mode de réalisation, on voit que la benne B est supportée par un châssis 1, rendu solidaire du plateau P du véhicule par tous moyens connus, sur chacun des longerons duquel reposent deux profilés 2 et 3 en forme d'U, superposés en position couchée pour former des rails intérieurs, celui inférieur 2 étant articulé par un axe 4 à l'arrière du châssis 1 pour permettre, par l'inclinaison des rails, le coulissement d'un cadre 5 tandis que celui supérieur 3 assure le guidage de galets 6 de roulement solidaires de ladite benne.

L'axe 4 assure le pivotement de l'ensemble lorsque la benne est déplacée vers l'arrière du véhicule, ledit axe étant à cet effet horizontal et sensiblement disposé dans le plan vertical, transversal, contenant le centre de gravité de ladite benne lorsqu'elle occupe une telle position.

Ce déplacement de la benne est rendu possible par le cadre 5 mobile qui constitue, après extension hors des profilés 2, un prolongement du chemin de roulement de la benne B. Le cadre 5 peut être déplacé en deux temps : un premier temps, correspondant à la demi-course du cadre déterminant le pivotement et le déchargement de ladite benne tandis que le deuxième temps, ou seconde moitié de la course utile, assure l'extension maximale de la benne hors du véhicule en vue de son chargement ou, éventuellement, de son utilisation comme soutien d'un plan de travail ou toutes autres utilisations.

Dans cette position, une béquille 7 articulée en 8 vers l'arrière du cadre 5 et normalement repliée sous lui assure le maintien horizontal de l'ensemble. Il y a lieu de noter également que dans cette position d'extension maximale deux des galets 6, au moins, de la benne restent engagés dans leur profilé 3 de guidage.

Selon un mode de réalisation, la course fractionnée du cadre 5 est obtenue au moyen d'un doigt 9 à rappel élastique centré dans un trou de l'extrémité arrière de l'un des profilés 2 et présentant deux épaulements 10 et 11 susceptibles de coopérer successivement et respectivement avec la partie large 12a et celle étroite 12b d'une lumière de guidage pratiquée longitudinalement dans le côté correspondant dudit cadre 5.

Des butées 13, solidaires de l'arrière du cadre 5 assurent la retenue de la benne B en position de chargement, de déchargement ou de transport. En outre, des moyens de verrouillage (non représentés) sont prévus pour maintenir le cadre 5 et, par suite, la benne B sur le plateau du véhicule pendant le transport pour éviter les inconvénients connus du freinage ou de l'accélération.

Des crochets 14 immobilisent pendant le transport le profilé 2 et le châssis 1 pour éviter tout pivotement intempestif sur l'axe 4 sous l'effet des trépidations par exemple.

Enfin, sous la partie antérieure du fond de la benne, est articulée en 15 la tige d'un amortisseur 16 hydraulique ou pneumatique articulé en 17 à la traverse avant du châssis 1 et ayant pour but de freiner le pivotement de ladite benne lors de son basculement pour le déchargement.

Bien entendu, la présente invention n'est pas limitée au mode de réalisation décrit et représenté.

C'est ainsi, entre autres, que pour certaines utilisations, la benne peut être remplacée par un plateau susceptible de rouler sur les rails décrits et de basculer vers l'arrière.

C'est ainsi, encore, que la position de l'axe d'articulation 15 de l'amortisseur peut être modifiée pour permettre le réglage de l'angle de pivotement du châssis 3. A cet effet, on peut prévoir sous le châssis une glissière (non représentée) dans laquelle peut coulisser et être immobilisée la chape d'articulation de l'axe 15.

## Revendications

1. Benne basculante notamment pour véhicules utilitaires, pouvant être déplacée horizontalement vers l'arrière sur un châssis (1) sur lequel s'articulent vers l'arrière autour d'un axe (4) deux profilés (3) formant, de chaque côté du châssis 1, des rails de guidage et les chemins de roulement de galets (6) solidaires de la benne (B), caractérisée en ce que chaque profilé (3) est rendu solidaire et disposé au-dessus d'un profilé (2), articulé vers l'arrière sur l'axe (4) du châssis (1), dans lequel coulisse un cadre (5) permettant, par son extension, de prolonger le chemin de roulement de la benne au-delà du bord arrière du véhicule.

2. Benne basculante selon la revendication 1, caractérisée en ce que l'extension du cadre (5) vers l'arrière est limitée par un dispositif permettant par deux tractions successives un déplacement partiel de la benne, et constitué par un doigt (9), à rappel élastique, centré dans un trou de l'extrémité arrière de l'un des profilés inférieurs (2) et présentant deux épaulements (10 et 11) susceptibles de coopérer successivement et respectivement avec la partie large (12a) et celle étroite (12b) d'une lumière de guidage pratiquée longitudinalement dans le côté correspondant dudit cadre (5).

## Claims

1. Removable tipping body, in particular for commercial vehicles, which can be moved horizontally rearwards on a chassis (1) on which are hinged towards the rear around a shaft (4) two formed sections (3) which form, on each side of the chassis (1), two guide rails and the races for the rollers (6) solidary to the skip (B), characterized by the fact that each formed section (3) is made solidary and located above a formed section (2), hinged towards the rear on a shaft (4) of the chassis (1), in which slides a frame (5) making it possible, through its extension, to extend the roller race of the skip beyond the rear edge of the vehicle.

2. Tipping skip in accordance with claim 1, characterized by the fact that the extension of the frame (5) towards the rear is limited by a device which, through two successive traction movements, allows partial movement of the skip, and comprised of a rod (9) with elastic recall, centered in a hole in the rear end of one of lower formed sections (2) and having two shoulders (10 and 11) capable of cooperating successively and respectively with the broad part (12a) and the narrow part (12b) of a guide opening made longitudinally in the corresponding side of the frame in question (5).

## Ansprüche

1. Abnehmbarer Kipperaufbau insbesondere für Nutzfahrzeuge mit horizontaler Verschiebemöglichkeit nach rückwärts auf einem Untergestell (1), auf dem rückwärts um einen Achsbolzen (4) zwei Profile (3) gelenkig verbunden sind, die auf beiden Seiten des Untergestells (1) die Führungsschienen und Laufbahn der mit dem Kipperaufbau (B) verbundenen Rollen (6) bilden, dadurch gekennzeichnet, daß die beiden Profile (3) jeweils fest auf den Profilen (2) angeordnet sind, welche rückwärts über einen Achsbolzen (4) gelenkig mit dem Untergestell (1) verbunden sind und in denen ein Rahmen (5) läuft, der durch Ausziehen die Laufbahn des Kipperaufbaus über den rückwärtigen Fahrzeugrand hinaus verlängert.

2. Abnehmbarer Kipperaufbau gemäß Anspruch 1 dadurch gekennzeichnet, daß die Ausziehmöglichkeit des Rahmens (5) nach hinten durch eine Vorrichtung begrenzt ist, mit der durch zweimaliges Ziehen eine Teilverstellung des Kipperaufbaus möglich ist und die aus einem, in einer Bohrung am rückwärtigen Ende eines der unteren Profile (2) zentrierten Federrückzug-Bolzen mit zwei Schulteransätzen (10 und 11) besteht, die jeweils nacheinander mit dem breiten Teil (12a) oder dem engen Teil (12b) eines Längsführungsschlitzes in der entsprechenden Seite des Rahmens (5) zusammenwirken.

*Fig.1*

*Fig.2*

0 022 720

# Fig.3

# Fig.4

# Fig.5